# EUROPEAN PATENT APPLICATION

(11) **EP 4 258 180 A1**
(43) Date of publication of application: **11.10.2023**
(21) Application number: 23162988.2
(22) Date of filing: 20.03.2023
(51) Int. Cl.: G06N 3/0985, G06N 5/01, G06N 7/01, G06N 20/10, G06N 20/20, G06N 3/006, G06N 3/126

(54) **METHOD FOR BLOCK-LEVEL NN DEPLOYMENT METRIC MODELLING**

(30) Priority: 05.04.2022 US 202217714089
(71) Applicant: NXP B.V., 5656 AG Eindhoven (NL)
(72) Inventor: Sanberg, Willem Pieter, 5656 AG Eindhoven (NL); Vogel, Sebastian Alexander Amadeus, 5656 AG Eindhoven (NL); Stolle, Kurt Henricus Werner, 5656 AG Eindhoven (NL)
(74) Representative: Schmütz, Christian Klaus Johannes

(57) **Abstract**

Various embodiments relate to a model generator configured to generate models configured to estimate a metric of a block in machine learning system, including: a memory; a processor coupled to the memory, wherein the processor is further configured to: identify a plurality of instances of a first block, wherein the instances have different first block parameters; implement the plurality of instances of the first block on a first target hardware device and measuring the metrics; train the model using the first block parameters and measured metrics for the plurality of instances of the first block to produce first model weights; and implement the model using the first model weights on the first target hardware.

## Description

### TECHNICAL FIELD

Various exemplary embodiments disclosed herein relate generally to a system and method for block-level neural network (NN) deployment metric modelling.

### BACKGROUND

Hardware-aware Neural Architecture Search (HA-NAS) is a highly attractive and successful approach for discovering network architectures that balance task accuracy and inference latency. In a step-based search algorithm, latency is usually determined at every iteration by directly profiling the architecture under investigation on actual hardware, e.g., using Hardware-in-the-Loop (HIL) measurements during the architecture search process.

### SUMMARY

A summary of various exemplary embodiments is presented below. Some simplifications and omissions may be made in the following summary, which is intended to highlight and introduce some aspects of the various exemplary embodiments, but not to limit the scope of the invention. Detailed descriptions of an exemplary embodiment adequate to allow those of ordinary skill in the art to make and use the inventive concepts will follow in later sections.

Various embodiments relate to a surrogate model generator configured to generate surrogate models configured to estimate a metric of a block in machine learning system, including: a memory; a processor coupled to the memory, wherein the processor is further configured to: identify a plurality of instances of a first block, wherein the instances have different first block parameters; implement the plurality of instances of the first block on a first target hardware device and measuring the metrics; train the surrogate model using the first block parameters and measured metrics for the plurality of instances of the first block to produce first surrogate model weights; and implement the surrogate model using the first surrogate model weights on the first target hardware.

Various embodiments are described, wherein the process is further configured to: implement the plurality of instances of the first block on a second target hardware device and measuring the metrics; train the surrogate model using the first block parameters and measured metrics for the plurality of instances of the first block implemented on the second target hardware to produce second surrogate model weights; and implement the surrogate model using the second surrogate model weights on the second target hardware.

Various embodiments are described, wherein the process is further configured to: identify a plurality of instances of a second block, wherein the instances have different second block parameters; implement the plurality of instances of the second block on the first target hardware device and measuring the metrics; train the surrogate model using the second block parameters and measured metrics for the plurality of instances of the second block implemented on the first target hardware to produce second surrogate model weights; and implement the surrogate model using the second surrogate model weights on the first target hardware.

Various embodiments are described, wherein identifying a plurality of instances of a first block includes using a block hypermodel.

Various embodiments are described, wherein training the surrogate model includes fitting the surrogate model to the measured metrics.

Various embodiments are described, where the processor is further configured to select a model architecture for the surrogate model based upon a predictor hypermodel.

Various embodiments are described, wherein measuring the metric includes implementing the first block on the first target hardware using the first block parameters; generating random weights for the first block; and inputting input data into the first block and measuring the metric.

Further various embodiments relate to a hardware-aware neural architecture search (HA-NAS) system configured to search for a neural network architecture to implement a neural network, including: a memory; a processor coupled to the memory, wherein the processor is further configured to: define a first neural network based upon a first selected network architecture; assess a first task accuracy of the first neural network; assess a first metric of the first neural network using a surrogate model predictor; and determine a first network hardware-aware score based upon the assessed task accuracy and assessed metric.

Various embodiments are described, wherein the processor is further configured to: select the first selected network architecture based upon a search strategy and a search space.

Various embodiments are described, wherein the processor is further configured to: update the search strategy based upon the first network hardware-aware score.

Various embodiments are described, wherein processor is further configured to: select a second network architecture based upon the updated search strategy; define a second neural network based upon a second selected network architecture; assess a second task accuracy of the second neural network; assess a second metric of the second neural network using the surrogate model predictor; and determine a second network hardware-aware score based upon the assessed task accuracy and assessed metric of the second neural network.

Various embodiments are described, wherein the processor is further configured to: repeat the steps of selecting a network architecture based upon the updated search strategy, defining a neural network, assessing a task accuracy, and determining a network hardware-aware score a plurality of iterations to produce a plurality of network hardware-aware scores; and determining the neural network associated with the best network hardware-aware score.

Various embodiments are described, wherein the processor is further configured to: determine if a maximum number of trials have been executed.

Various embodiments are described, wherein assessing the first metric of the first neural network includes: breaking the first neural network down into a plurality of blocks, wherein the surrogate model predictor includes a plurality surrogate models corresponding to the plurality of blocks; applying surrogate models corresponding to the plurality of blocks on the plurality of blocks to generate a plurality of first block metrics; and combining the plurality of first block metrics to produce the first metric.

Various embodiments are described, wherein the first metric is a latency of the first neural network.

Various embodiments are described, wherein the surrogate predictor model includes a plurality of surrogate models, wherein each of the surrogate models is directed to different target hardware.

Various embodiments are described, wherein the first neural network includes a plurality of blocks including a plurality of block types; and the surrogate model predictor includes a plurality of surrogate models, wherein each of the surrogate models is directed to different block types.

Various embodiments are described, wherein
the first neural network includes a plurality of blocks including a plurality of block types; and the surrogate model predictor includes a plurality of surrogate models, wherein each of the surrogate models is directed to different block types and hardware targets.

Various embodiments are described, wherein assessing the first task accuracy uses an accuracy predictor function.

Various embodiments are described, wherein the accuracy predictor function is based on support vector regression in combination with an early stopping scheme.

### BRIEF DESCRIPTION OF THE DRAWINGS

In order to better understand various exemplary embodiments, reference is made to the accompanying drawings, wherein:
FIG. 1 illustrates a generic diagram of a HA-NAS algorithm;
FIG. 2 illustrates how latency of the neural network is determined;
FIG. 3 illustrates a SM generator that produces a SM such as the latency predictor for use in the HA-NAS algorithm; and
FIG. 4 illustrates an exemplary hardware diagram for implementing the HA-NAS 100 of FIG. 1 and/or the SM generator 300 of FIG. 3.

To facilitate understanding, identical reference numerals have been used to designate elements having substantially the same or similar structure and/or substantially the same or similar function.

### DETAILED DESCRIPTION

The description and drawings illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be for pedagogical purposes to aid the reader in understanding the principles of the invention and the concepts contributed by the inventor(s) to furthering the art and are to be construed as being without limitation to such specifically recited examples and conditions. Additionally, the term, "or," as used herein, refers to a non-exclusive or *(i.e.,* and/or), unless otherwise indicated (e.g., "or else" or "or in the alternative"). Also, the various embodiments described herein are not necessarily mutually exclusive, as some embodiments can be combined with one or more other embodiments to form new embodiments.

Neural networks consistently achieve competitive results in a wide variety of machine learning contexts. It is thus not surprising that the enterprise and academics alike have shown great interest in utilizing this technology for their specific domains. Furthermore, with cloud services offering specialized neural infrastructure at an instant, a network can be deployed with minimal operational investment. Moreover, these networks appear outside of data centers with increasing frequency, for example in wearable or smart-home devices, and even in passenger cars. This shift to edge devices brings a new challenge: hardware deployment costs of neural networks must be reduced such that they are suitable for execution on more computationally and power constrained devices. In this context, hardware deployment costs may include the execution time, memory requirements, or energy usage of a model deployed on a hardware device.

Despite the increased availability of model deployment options, creating an optimal model for any specific domain involves many individual design choices. As a consequence, expert knowledge is in high demand. A possible solution to meet this demand is the use of automated machine learning (AutoML) algorithms, which aim to lower the bar of entry. In general, using such a method entails defining the input set, target domain, and a search space. Next, the AutoML algorithm finds a model that optimally fits the provided specification. In the case of neural networks, the field of Neural Architecture Search (NAS) studies AutoML that yields architectures based upon task performance, generalizability, robustness, *etc.* Latest state-of-the-art performance on a number of challenging computer vision datasets has been achieved with neural architectures found via an automated search. In terms of a mathematical interpretation, neural networks can be described as constructs that memorize data and yield predictions via a similarity function. Under this paradigm, the architecture determines how this learned knowledge is translated onto the target domain. An optimal architecture performs this in a way that best suits the data and its projection onto the domain. This could give an indication to why searching for an optimal architecture is a task that fares well under guided optimization. Having defined this premise, one of the largest challenges for achieving practical NAS is the amount of computational time and power required per search. One reason for this is that each trial network must be fully trained before the search strategy can determine the next trial. Recent research has revealed that this can be alleviated by estimating the performance directly from the architecture using a surrogate model. As a consequence, the amount of training required is drastically reduced.

As indicated previously, there is increasing demand for models that meet specific hardware deployment cost requirements. This leads to the field of hardware-aware neural architecture search (HA-NAS), which aims to optimize for both task-performance and hardware deployment costs. Embodiments of a HA-NAS will be described that extends the search strategy to optimize the weighted sum of task-performance and hardware costs. The search strategy can then determine architectures that perform well on both metrics, effectively determining a set of Pareto-optimal architectures.

Hardware-aware Neural Architecture Search (HA-NAS) is a highly attractive and successful approach for discovering network architectures that balance task accuracy and inference latency. In a step-based search algorithm, latency is usually determined at every iteration by directly profiling the architecture under investigation on actual hardware, e.g., using Hardware-in-the-Loop (HIL) measurements during the architecture search process. However, this procedure imposes limitations on the scalability of search processes, because HIL requires a full deploy-and-profile SW toolchain including access to the intended target hardware platform. As such, the ability to assess the impact of a given architecture on latency without hardware access is a valuable asset for scalable HA-NAS. This is particularly important in cases where the search process is distributed to multiple workers searching and evaluating in parallel. In a scenario with *e.g.* 100 workers, these workers sample 100 candidate networks in parallel and then need to deploy and profile these candidates for their metric evaluation. As a consequence, either each worker has direct local access to HIL measurements (expensive option, due to 100 local hardware targets), or the workers have access to a distributed farm of target HW for remote HIL measurements (complex setup and expensive to maintain) or the deploy-and-profile process is done on a single entity remotely (particularly slow due to high workload on this profiling entity).

One alternative approach that is commonly used in current state-of-the-art HA-NAS methods, is to exploit a Lookup Table (LUT) that contains the measured deployment metrics (*e.g.,* latency) of certain network architecture configurations. More specifically, those LUTs contain latencies of a selection of subnetworks *(i.e.,* of individual layers or of larger blocks consisting of multiple NN-layers). During the network search, these subnetworks are combined into a full architecture. The benefit of using LUTs is that the entries in the LUT are defined and measured once a-priori for each potential hardware target. Using a LUT assumes that an accurate estimation of the latency of the full network may be derived by summing the individual contributions of subnetworks within the full network. The validity of this assumption has been confirmed in various experiments. Therefore, a LUT-based approach efficiently assesses the deployment metric (*e.g.* architecture latency) during a search process.

Nevertheless, this LUT-based approach has a major limitation. The limitation is that the architecture search process cannot evaluate the latency of an architecture that contains blocks that were not measured a-priori (*i.e.* blocks without entry in the LUT revealing their deployment metric), thereby drastically reducing the flexibility of what network architectures can be proposed and found. As a consequence, the search space is inherently limited by the preselected blocks and entries in the LUT.

This flexibility-constraint may be overcome by interpolating LUT entries by using a Machine Learning (ML)-based surrogate model. This allows for the estimation of the deployment metric of previously unprofiled/unevaluated subnetworks, blocks, or NN-layers and considerably generalizes the latency estimation beyond the limited set of LUT entries, *i.e.,* a trained surrogate model can provide sophisticated interpolation. An efficient deployment metric predictor using an ML-based surrogate model is proposed. In experiments, neural networks, random forests, linear regression, and gradient boosted trees were evaluated, and it was found that gradient boosted tree performed especially well for predicting the deployment metric.

As a result, such a predictor allows deployment metric (*e.g.,* latency) evaluation at an efficiency that is comparable to that of a LUT (by not requiring access to HIL). Furthermore, such predictor offers considerably higher flexibility than a LUT.

Embodiments of a deployment metric model that use a framework to estimate the latency of a neural network using a diverse set of block-level latency predictors will be described. While the example embodiments use latency as the metric to be modeled, other metrics may be modeled and optimized in order to arrive at the final suggested NN architecture. A predictor may be trained by first profiling many independently sampled block instances and thereby filling a large LUT. Then, an ML-based predictor may be trained using those LUTs. For testing purpose, a part of the LUT may be left out and a correlation of the predictor with the true measurements *(i.e.,* the left out measurements) may be reported. Experiments on isolated blocks (blocks that are commonly found in classification architectures, such as inverted residual blocks, were evaluated) show latency predictions using a decision tree model as a predictor accurately estimates the latency. Such decision tree model has a Pearson correlation coefficient exceeding 0.98 on all tested platforms. Moreover, when such blocks are connected to a full network, the sum of all block estimations correlates highly with the measured network latency, having Spearman correlation coefficients higher than 0.90 on most platforms. Achieving a high Spearman correlation coefficient is important for applying the deployment metric estimation in a NN architecture search framework. Furthermore, in a guided NN architecture search, the set of Pareto-optimal networks found using a surrogate model for the deployment metric (in the experiment, the network latency with the ML-based latency predictor was estimated) have similar performance to those found using a HIL-based technique, yielding a Wasserstein distance between both sets of Pareto-optimal networks of less than 0.02. These findings give reason to believe that a block-based surrogate model could be the solution for minimizing the amount of hardware-access needed to run an effective architecture search.

Embodiments of a surrogate model (SM) to provide latency assessments of neural network architectures will be described. In other embodiments the SM may provide other metric assessments (*e.g.,* processing load, power consumption, bandwidth utilization, hardware utilization, *etc.*) or combinations of metrics. Further, the SM may assess the metric of other types of models (*e.g.,* Linear Regression, Logistic Regression, Decision Tree, SVM, Naive Bayes, kNN, K-Means, Random Forest, Gradient Boosted Trees, *etc.*) The SM approach described herein exploits machine learning by training predictor models that operate on blocks of the NN, for example, at the level of network layers. In broad terms, a regression model that determines a metric performance (latency in this example) is trained on networks and the corresponding latency from profiling measurements that have been performed on hardware targets of interest, and this trained model generalizes the latency performance so that it accurately predicts unseen blocks. As a result, the trained model becomes a metric predictor that may be used as a surrogate model to assess hardware performance in any HA-NAS algorithm. This avoids the need for hardware access during HA-NAS while at the same time preserving the benefits that such HIL-methodologies offer in regard of architecture flexibility, and in addition being of similar efficiency as LUT-based approaches.

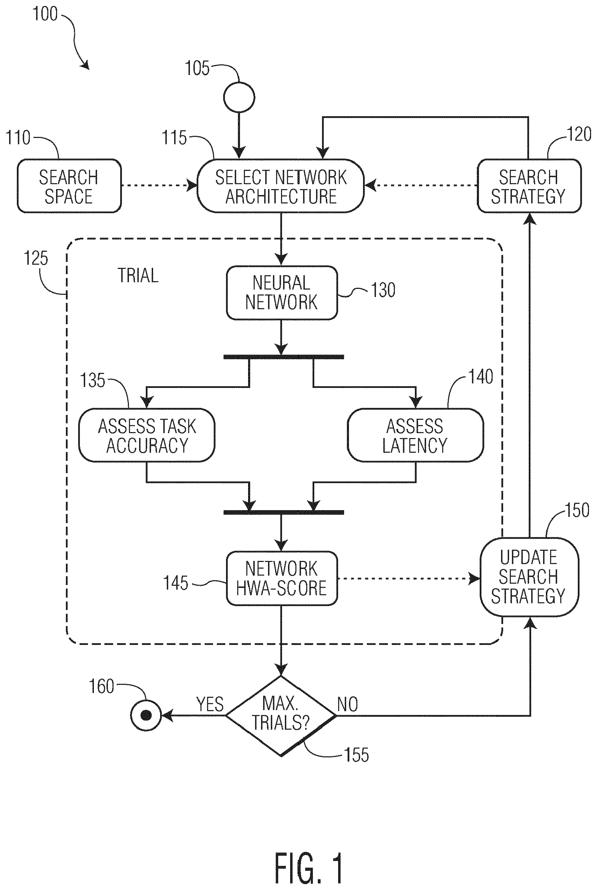

FIG. 1 illustrates a generic diagram of a HA-NAS method. Any HA-NAS method 100 may be used to find a desired neural network architecture. Note that the HA-NAS algorithm 100 may be applied to other types of machine learning and/or software architectures that take hardware deployment cost into account during optimization. The HA-NAS algorithm 100 performs a search of various neural network architectures to determine an architecture that provides an optimal accuracy and latency (or other metric). Many known HA-NAS algorithms 100 exist using various approaches, and any of these HA-NAS algorithms 100 may benefit from the SM embodiments described herein. The HA-NAS algorithm 100 is started from 105. Inputs to the HA-NAS algorithm may be for example, the training inputs and target outputs of the neural network, the desired accuracy and latency of the neural network, means to determine a hardware-aware score of a neural network trial, *etc.* The HA-NAS algorithm 100 may include a search space 110 that may be a database of various building blocks that may be used to build the neural network 130. The search space may further include a definition of suitable input sizes (*e.g.,* a resolution of an image, a sampling window size of sensor data). A block in the search space may be defined as any sub-network that may be constructed from a bijective mapping of parameters. In other words, these parameters unambiguously define a single block instance, and inversely this set of parameters can be uniquely inferred by analyzing the computational graph that makes up the block. For example, a Convolutional block is uniquely represented by a set of parameters, namely the input shape, kernel shape, stride, dilation, and amount of filters.

The HA-NAS algorithm 100 may also include a search strategy algorithm 120. The search strategy algorithm 120 defines how the search for a network architecture may progress. Different HA-NAS algorithms 100 will use different search strategy algorithms 120. A multitude of search strategies exist among which for example Bayesian optimization, evolutionary search, reinforcement-learning-based search, successive halving, and random search have shown to work well.

The HA-NAS method 100 first selects a network architecture 115. At the beginning of the HA-NAS method 100 an initial network architecture is selected based upon the search space 110 and the search strategy 120. As the HA-NAS method 100 iterates through different network architectures, the selection of the network architecture will derive an updated network architecture based upon the search strategy 120. The network architecture selection 115 produces a neural network 130 to be evaluated. New neural networks 130 are discovered by putting instances of a block in sequence. With this in mind, the search space 110 thus contains variations on a reference network that a block is based on.

The HA-NAS method 100 next assesses the accuracy of the proposed neural network 130 in carrying out the specified task 135. This may be accomplished by training the network on a training set until convergence of the task accuracy or until an early stopping paradigm stops the training process. In another embodiment, the accuracy assessment may be accomplished by an accuracy predictor function. The accuracy predictor function may assess the network performance without training. In another embodiment, the accuracy predictor function may be based on support vector regression in combination with an early stopping scheme. Various accuracy predictor functions are known and may be used to assess the task accuracy of the proposed neural network 130.

The HA-NAS method 100 also assesses 140 the latency of the proposed neural network 130 using a SM to predicted the latency. This will be described in further detail below.

Then the HA-NAS method 100 produces a network hardware-aware (HWA)-score 145 based upon the task accuracy prediction and latency prediction. The HWA-score combines the task accuracy prediction and latency prediction to produce the HWA-score. This HWA-score may also be based upon the inputs to the HA-NAS method 100 and/or a specific hardware target. The HWA-score provides a measure of the proposed neural network 130 and is used to compare the different proposed neural networks 130 to one another. The HWA-score may be stored along with parameters associated with the proposed neural network 130. The HWA-score may be used to update the search strategy 150. For example, a gradient approach or a Gaussian process regressor may be used to adapt the search strategy based upon trends in the HWA-score. This update to the search strategy may be provided to the search strategy algorithm 120.

Further, HA-NAS method 100 determines if a maximum number of trials has been reached 155. If so, the HA-NAS method 100 ends and outputs 160 the neural network that has the best HWA-score. If not, then the search strategy may be updated 150 and another neural architecture proposed for evaluation. The maximum number of trials may be a fixed predetermined number based upon the input data. As illustrated, the HA-NAS method 100 performs a number of trials 125 on proposed neural network architectures where a trial includes assessing the task accuracy 135 and latency 140 of the proposed neural network 130 and producing a HWA-score 145 for the proposed neural network 130. The number of trials performed may be limited by a maximum number of trials 155.

The HA-NAS method 100 of FIG. 1 is meant to be a generic description of a HA-NAS method. The HA-NAS method 100 may be implemented in many different ways using any desired methods.

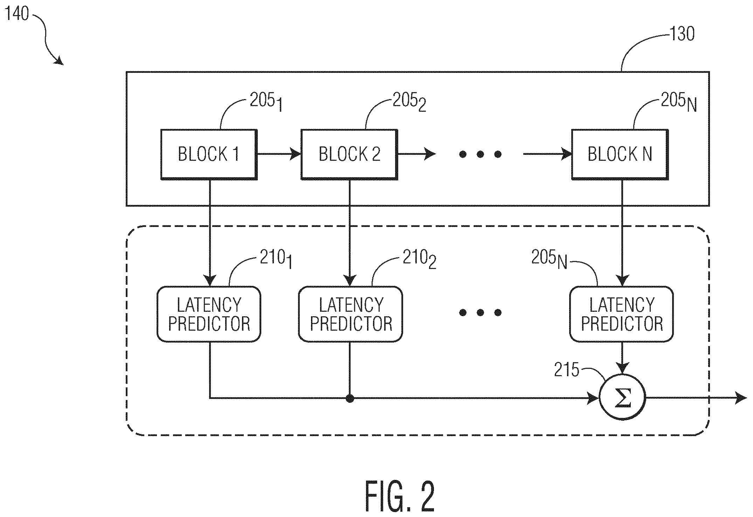

FIG. 2 illustrates how latency of the neural network is determined. The calculation of the network latency is based on the assumption that network latency may be sufficiently approximated by the sum of stacked block latencies. Such block may be profiled individually and mixed-and-matched to yield new networks and retain the summed latency property. Thus, summing latency predictions for each of a network's blocks yields an overall latency prediction. Experiments have shown that this assumption is valid.

First, the proposed neural network 130 is broken down into a plurality of blocks 205₁ to 205_{N}. Latency predictors 210₁ to 210_{N} are applied to corresponding blocks 205₁ to 205_{N}. The latency predictors 210₁ to 210_{N} are SMs that have been trained to predict the latency associated with different block types. By training the SMs, its surrogate model weights (*i.e.,* parameters, neural network weights, biases, or other configuration parameters) of the SM are optimized to accurately predict the latency of measured block instances. Accordingly, the latency predictors 210₁ to 210_{N} are selected based upon the block type of each corresponding block 205₁ to 205_{N}. Then the parameters defining the blocks 205₁ to 205_{N} are input into the corresponding latency predictors 210₁ to 210_{N} to produce a predicted latency for each block making up the neural network 130. These predicted latencies may then be summed 215 to determine the predicted total neural network latency.

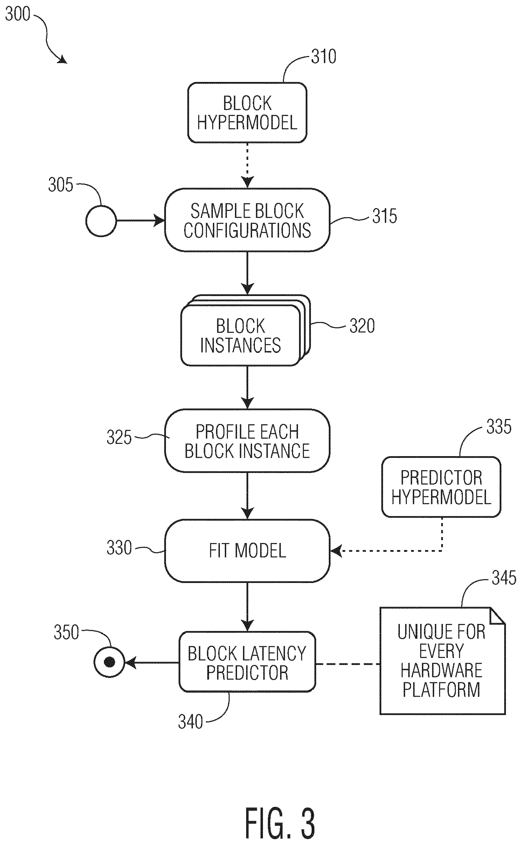

FIG. 3 illustrates a SM generator that produces a SM such as the latency predictor for use in the HA-NAS method 100. The SM generator 300 starts from 305 and receives a block hypermodel 310 as input. The block hypermodel is defined by hyperparameters. Hyperparameters include, for example, the type of ML model that is being evaluated, parameters that define the types of blocks that may be used in the model, parameters regarding the number of block instances to use, parameters that define the block configuration depending on the selected block type, *etc.* Next, the SM generator 300 may sample block configurations 315. This may be done using input from the block hypermodel 310. The hypermodel maps a set of hyperparameters to a network architecture. Hence, the hyperparameters help to generate sample block configurations. Hence, the hypermodel 310 may include hyperparameters that help to generate sample block configurations. These sample block configurations may be thought of as different block types, where a set of block parameters are used to define a specific instance of the block type. Accordingly, these block configurations provide the basis for selecting a network architecture 115 as described above. The following steps may now be applied to each of the different block configurations. The SM generator 300 produces a plurality of block instances 320 based upon a block configuration using different block parameters. For example, the sample block configurations 315 may correspond to each of the different types of blocks that may be found in the search space 110 of the HA-NAS method 100.

Next, the SM generator 300 profiles each block instance 320 on a target hardware platform 325. This may be done by loading each block instance 320 on the target hardware platform with a random set of weights *(i.e.,* the block instance may incorporate untrained random neural network weights) and calculating the resulting latency associated with executing the block instance. This may be done once or repeated a defined number of times with different random weights and the resulting latencies averaged or by selecting the largest latency. The latter approach may account for latency variations that could result with different sets of weights. This results in a set of hardware based latencies associated with different block parameters that define the different block instances 320.

The SM generator 300 then uses this set of hardware based latencies to train a SM that may be used to predict the latency for the block configuration for any block parameters by fitting a model to the set of hardware based latencies 330. The set of hardware based latencies is generated to be large enough to train the SM. For example, this may be done by selecting a subset of the set of hardware base latencies to verify the SM model and using the remaining hardware based latencies to train the SM. A predictor hypermodel 335 may be used to help define the architecture of the SM that will be trained This predictor hypermodel may include parameters that define, for example, the type of predictor model that is being used. Various experiments have been done to model latency of different types of blocks using different types of machine learning models, including linear regression, decision forest regression, and deep neural network regression. These experiments showed that Random Forest and Boosted Trees yield similar block-level latency estimates as were found using measurements on hardware. Other types of model architectures may be used as well for the SM and the type of model used may vary based upon the block type and the hyperparameters used to define the SM. This SM then becomes the block latency predictor 340 for a given block type. It is noted that the block latency predictor 340 may be unique for every hardware platform 345. Accordingly steps 325 and 330 are repeated for each target hardware platform to be used to implement the neural network.

Then steps 315, 320, 325, and 330 are repeated for each of the block configurations that have been identified.

In the end, the SM generator 300 generates a block latency predictor 340 for each different block configuration and target hardware. These are the latency predictors 210₁ to 210_{N} used in FIG. 2. This process can be very efficient as random neural network weights are used to profile each block instance on the target hardware. This will be much faster than the current process of measuring the complete performance of different instances of a neural network which would require the training of each different instance of the neural network, which is very time consuming.

Three categories of experiments that confirm the validity of this approach and simultaneously illustrate how to build and use this system were carried out: (1) prediction error on block-level; (2) prediction error for full network; and (3) the impact of the predictor on a practical HA-NAS experiment.

First, the evaluation of the prediction error of a block-level latency predictor entails a comparison over different predictor types (linear, random forest, boosted trees, dense neural network), network block families (ResNet blocks, MBConv blocks) and hardware targets (CPU, GPU, ASIC). As a quantitative evaluation, the Pearson and Spearman correlation coefficients of predictions and measurements have been calculated. The latency predictor with a Gradient Boosted Trees-structure achieves the best scores, where both metrics are 0.89 or higher over all the different hardware targets and block types.

Second, the value of the block-level predictions are considered in the scope of assessing the latency of a full network architecture, via summation of the predictions for the blocks therein. These experiments lead to results, where the predicted versus the measured latency of full networks is determined. These results illustrate that a SM that provides predictions that are highly correlated with the actual measurements, typically obtaining correlation coefficients of above 0.8 or 0.9 for most combinations of HW target and block types.

Third, the impact of these high yet imperfect scores on the envisioned application: HA-NAS. To this end, HA-NAS with HIL versus HA-NAS with the disclosed SM on an image classification use case are compared. An exemplary result of these benchmarking experiments illustrates that the distribution of identified solutions on the pareto-optimal front has high similarity when comparing the sets of HIL-based and SM-based network candidates. This illustrates that replacing HIL with the disclosed SM is not only a promising, but even a realistic and feasible approach to do HA-NAS, at least in the case of image classification used in the experiments.

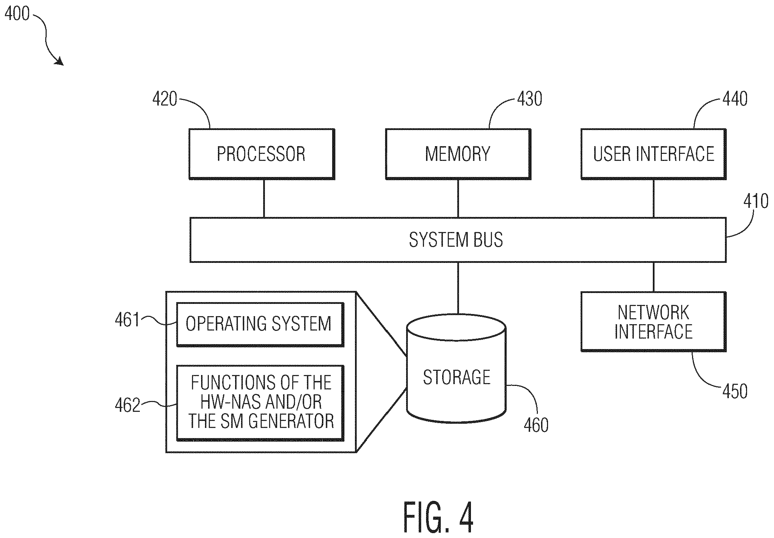

FIG. 4 illustrates an exemplary hardware diagram 400 for implementing the HA-NAS 100 of FIG. 1 and/or the SM generator 300 of FIG. 3. As shown, the device 400 includes a processor 420, memory 430, user interface 440, network interface 450, and storage 460 interconnected via one or more system buses 410. It will be understood that FIG. 4 constitutes, in some respects, an abstraction and that the actual organization of the components of the device 400 may be more complex than illustrated.

The processor 420 may be any hardware device capable of executing instructions stored in memory 430 or storage 460 or otherwise processing data. As such, the processor may include a microprocessor, microcontroller, graphics processing unit (GPU), neural network processor, field programmable gate array (FPGA), application-specific integrated circuit (ASIC), or other similar devices.

The memory 430 may include various memories such as, for example L1, L2, or L3 cache or system memory. As such, the memory 430 may include static random-access memory (SRAM), dynamic RAM (DRAM), flash memory, read only memory (ROM), or other similar memory devices.

The user interface 440 may include one or more devices for enabling communication with a user such as a neural network designer. For example, the user interface 440 may include a display, a touch interface, a mouse, and/or a keyboard for receiving user commands. In some embodiments, the user interface 440 may include a command line interface or graphical user interface that may be presented to a remote terminal via the network interface 450.

The network interface 450 may include one or more devices for enabling communication with other hardware devices. For example, the network interface 450 may include a network interface card (NIC) configured to communicate according to the Ethernet protocol or other communications protocols, including wireless protocols. Additionally, the network interface 450 may implement a TCP/IP stack for communication according to the TCP/IP protocols. Various alternative or additional hardware or configurations for the network interface 450 will be apparent.

The storage 460 may include one or more machine-readable storage media such as read-only memory (ROM), random-access memory (RAM), magnetic disk storage media, optical storage media, flash-memory devices, or similar storage media. In various embodiments, the storage 460 may store instructions for execution by the processor 420 or data upon with the processor 420 may operate. For example, the storage 460 may store a base operating system 461 for controlling various basic operations of the hardware 400. The storage 462 may store instructions for execution by the processor 420 to carry out the functions of the HA-NAS 100 and/or the SM generator 300.

It will be apparent that various information described as stored in the storage 460 may be additionally or alternatively stored in the memory 430. In this respect, the memory 430 may also be considered to constitute a "storage device" and the storage 460 may be considered a "memory." Various other arrangements will be apparent. Further, the memory 430 and storage 460 may both be considered to be "non-transitory machine-readable media." As used herein, the term "non-transitory" will be understood to exclude transitory signals but to include all forms of storage, including both volatile and non-volatile memories.

The system bus 410 allows communication between the processor 420, memory 430, user interface 440, storage 460, and network interface 450.

While the host device 400 is shown as including one of each described component, the various components may be duplicated in various embodiments. For example, the processor 420 may include multiple microprocessors that are configured to independently execute the methods described herein or are configured to perform steps or subroutines of the methods described herein such that the multiple processors cooperate to achieve the functionality described herein. Further, where the device 400 is implemented in a cloud computing system, the various hardware components may belong to separate physical systems. For example, the processor 420 may include a first processor in a first server and a second processor in a second server.

HA-NAS algorithms may be used to automate the search for machine learning neural network architectures that produce more optimal results. Various metrics may be used to optimize the search results. For example, accuracy and latency may be parameters of interest when the ML model will be implemented is situations with limited hardware capabilities and constraints. A HIL approach provides accurate results, but consumes a very large amount of resources to train and evaluate a variety of models on the target hardware. Embodiments of a SM described herein provides a technological solution to be able to better search for and evaluate a variety of models. Because use of the embodiments of the SM described herein greatly reduces the amount of time and processing to evaluate a specific instance of a model, the HA-NAS algorithm may take significantly less time to find a solution. Alternatively, the HA-NAS may expand its search space because of its increased efficiency to evaluate a larger number of potential architectures, and hence may find even more optimal network architectures.

Because the data processing implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

Any combination of specific software running on a processor to implement the embodiments of the invention, constitute a specific dedicated machine.

It should be appreciated by those skilled in the art that any block diagrams herein represent conceptual views of illustrative circuitry embodying the principles of the invention.

## Claims

1. A model generator configured to generate models configured to estimate a metric of a block in machine learning system, comprising:
a memory;
a processor coupled to the memory, wherein the processor is further configured to:
identify a plurality of instances of a first block, wherein the instances have different first block parameters;
implement the plurality of instances of the first block on a first target hardware device and measuring the metrics;
train the model using the first block parameters and measured metrics for the plurality of instances of the first block to produce first model weights; and
implement the model using the first model weights on the first target hardware.

2. The model of claim 1, wherein the processer is further configured to:
implement the plurality of instances of the first block on a second target hardware device and measuring the metrics;
train the model using the first block parameters and measured metrics for the plurality of instances of the first block implemented on the second target hardware to produce second model weights; and
implement the model using the second model weights on the second target hardware.

3. The model of any of claims 1 to 2, wherein the process is further configured to:
identify a plurality of instances of a second block, wherein the instances have different second block parameters;
implement the plurality of instances of the second block on the first target hardware device and measuring the metrics;
train the model using the second block parameters and measured metrics for the plurality of instances of the second block implemented on the first target hardware to produce second model weights; and
implement the model using the second model weights on the first target hardware.

4. The model of any of claims 1 to 3, wherein identifying a plurality of instances of a first block includes using a block hypermodel.

5. The model of any of claims 1 to 4, wherein training the model includes fitting the model to the measured metrics.

6. The model of any of claims 1 to 5, where the processor is further configured to select a model architecture for the model based upon a predictor hypermodel.

7. The model of any of claims 1 to 6, wherein measuring the metric includes
implementing the first block on the first target hardware using the first block parameters;
generating random weights for the first block; and
inputting input data into the first block and measuring the metric.

8. A hardware-aware neural architecture search (HA-NAS) system configured to search for a neural network architecture to implement a neural network, comprising:
a memory;
a processor coupled to the memory, wherein the processor is further configured to:
define a first neural network based upon a first selected network architecture;
assess a first task accuracy of the first neural network;
assess a first metric of the first neural network using a model predictor; and
determine a first network hardware-aware score based upon the assessed task accuracy and assessed metric.

9. The HA-NAS system of claim 8, wherein the processor is further configured to:
select the first selected network architecture based upon a search strategy and a search space.

10. The HA-NAS system of claim 9, wherein the processor is further configured to:
update the search strategy based upon the first network hardware-aware score.

11. The HA-NAS system of claim 10, wherein processor is further configured to:
select a second network architecture based upon the updated search strategy;
define a second neural network based upon a second selected network architecture;
assess a second task accuracy of the second neural network;
assess a second metric of the second neural network using the model predictor; and
determine a second network hardware-aware score based upon the assessed task accuracy and assessed metric of the second neural network.

12. The HA-NAS system of claim 11, wherein the processor is further configured to:
repeat the steps of selecting a network architecture based upon the updated search strategy, defining a neural network, assessing a task accuracy, and determining a network hardware-aware score a plurality of iterations to produce a plurality of network hardware-aware scores; and
determining the neural network associated with the best network hardware-aware score.

13. The HA-NAS system of claim 12, wherein the processor is further configured to:
determine if a maximum number of trials have been executed.

14. The HA-NAS system of any of claims 8 to 13, wherein assessing the first metric of the first neural network includes:
breaking the first neural network down into a plurality of blocks, wherein the model predictor includes a plurality models corresponding to the plurality of blocks;
applying models corresponding to the plurality of blocks on the plurality of blocks to generate a plurality of first block metrics; and
combining the plurality of first block metrics to produce the first metric.

15. The HA-NAS system of any of claims 8 to 14, wherein the first metric is a latency of the first neural network.
